# EUROPÄISCHE PATENTSCHRIFT

(11) **EP 0 204 224 B1**
(45) Veröffentlichungstag und Bekanntmachung des Hinweises auf die Patenterteilung: **28.07.1993**
(21) Anmeldenummer: 86106978.9
(22) Anmeldetag: 22.05.1986
(51) Int. Cl.: G02B 6/42

(54) **Verfahren und Vorrichtung zur Justage und Fixierung eines Festkörpers und damit hergestelltes Bauelement**
Method and apparatus for adjusting and fixing a clamping body, and the resulting manufactured component
Procédé et dispositif pour le réglage et l'ancrage d'un corps de serrage et le composant en résultant

(30) Priorität: 29.05.1985 DE 3519260
(43) Veröffentlichungstag der Anmeldung: 10.12.1986
(73) Patentinhaber: SIEMENS AKTIENGESELLSCHAFT, 80333 München (DE)
(72) Erfinder: Althaus, Hans, Dr. rer. nat., D-8411 Lappersdorf (DE); Kuhlmann, Werner, Dr. rer. nat., D-8000 München 90 (DE); Späth, Werner, Dipl.-Phys., D-8150 Holzkirchen (DE)

(56) Entgegenhaltungen:
- EP-A- 0 126 003
- DE-A- 3 307 466
- DE-A- 3 430 762
- GB-A- 2 128 768

## Beschreibung

Die Erfindung betrifft ein Verfahren nach dem Oberbegriff des Anspruchs 1 und eine Vorrichtung nach dem Oberbegriff des Anspruchs 19 zur Justage und Fixierung eines Festkörpers und ein damit hergestelltes Bauelement nach dem Oberbegriff des Anspruchs 25.

Aus der DE-OS 33 07 466 ist eine Vorrichtung zum Haltern eines elektro-optischen oder opto-elektrischen Wandlers und eines vor dem Wandler endenden Lichtwellenleiters bekannt. Außerdem geht aus dieser Offenlegungsschrift ein Verfahren zum Herstellen einer Lötverbindung zwischen einem Lichtwellenleiter und einem Trägerteil als bekannt hervor.

Weiterhin ist aus der GB-A-2 128 768 eine lichtemittierende Vorrichtung bekannt, bei der ein Laserdioden-Chip und das Ende einer optischen Faser in einem abgeschlossenen Gehäuse optisch miteinander gekoppelt sind.

Schließlich ist aus der EP-A-126 003 ein Verfahren und eine Vorrichtung zum Verbinden einer optischen Faser mit dem Wellenleiter eines integrierten optischen Bauteils bekannt.

Das technische Problem besteht in der Justage und Fixierung eines Festkörpers in einer bestimmten räumlichen Relation zu einem weiteren Objekt. Häufig muß ein Festkörper in Relation zu einem weiteren Objekt mit einer hohen Genauigkeit justiert und sodann mit der erreichten Genauigkeit befestigt und an dem jeweiligen, nach der Justierung eingenommenen Ort auch langfristig gehalten werden.

Beispielsweise muß ein Lichtwellenleiter, beispielsweise eine Glasfaser, in einem definierten Abstand größer oder gleich Null relativ zu einer Laserdiode fixiert werden. Bei Verwendung einer entsprechenden Optik muß beispielsweise ein Lichtwellenleiter in einem definierten Abstand größer als Null vor einer Laserdiode fixiert werden, wobei das von der Laserdiode ausgesandte Licht über die entsprechende Optik an dem Lichtwellenleiter zu einem hohen Grad in den Lichtwellenleiter eingekoppelt werden soll. Als entsprechende Optik kann beispielsweise eine Taper-Linse verwendet werden, die am Ende einer Glasfaser angeordnet ist.

Bei der Fixierung eines Lichtwellenleiters in einem definierten Abstand zu einer Laserdiode werden, insbesondere bei Verwendung einer Monomodefaser als Lichtwellenleiter, besonders hohe Anforderungen an die Lagegenauigkeit und an die Langzeitstabilität dieser Lagegenauigkeit unter Betriebs- und Lagerbedingungen gestellt. Die Lagegenauigkeit einer Monomodefaser muß dabei langzeitig stabil sein mit einer Toleranz von maximal ±0,05 µm. Diese maximale Toleranz darf unter Betriebs- und Lagerbedingungen von -40 °C bis +60 °C nicht überschritten werden.

Entsprechend den jeweils verwendeten Lichtwellenleitern müssen zur Lichtwellenleiter-Justage und zur Lichtwellenleiter-Befestigung kleinere oder größere Lagegenauigkeiten der Lichtwellenleiter vor der jeweiligen Laserdiode eingehalten werden.

Bei Multimodefasern, beispielsweise bei einer Gradienten-Indexfaser mit einem Kerndurchmesser von 50 µm, muß eine tolerierbare Justage-Lagetoleranz und Langzeit-Lagetoleranz Δx,Δy von etwa ±1 µm eingehalten werden. Bei Verwendung einer Monomodefaser, die beispielsweise einen Kern von 5 µm aufweisen kann, muß eine tolerierbare Justage-Lagetoleranz und Langzeit-Lagetoleranz Δx,Δy von etwa ±0,05 µm eingehalten werden.

Mit den derzeit zur Verfügung stehenden mechanischen und elektromechanischen Verstellgeräten, beispielsweise mit einem Schrittmotor, mit einem Piezo-Kristall usw., ist es relativ problemlos, obige Verstellgenauigkeiten kurzzeitig zu erreichen und kurzzeitig über Sekunden oder sogar über Minuten hinweg zu halten.

Mit den derzeit zur Verfügung stehenden Verfahren und Vorrichtungen ist es jedoch nicht möglich, die Lichtwellenleiter mit der erreichten Genauigkeit zu befestigen und an dem jeweiligen, nach der Justierung erreichten Ort des Lichtwellenleiters auch langfristig zu halten.

Bisher werden oder wurden eine Reihe verschiedener Lichtwellenleiterbefestigungsmethoden im Laserdioden-Modulaufbau verwendet. In der Mehrzahl der derzeit auf dem Markt befindlichen Lasermodule ist die Laserdiode auf einem eigenen Subträger (Submount) befestigt, der dann seinerseits über ein Zwischenbefestigungs-Element mit dem Lichtwellenleiterbefestigungspunkt verbunden ist. Hierbei ist der Lichtwellenleiter entweder in einer Kapillare, die aus Metall-Quarz oder ähnlichem besteht, oder direkt an dem Fixierungspunkt befestigt. Die Befestigung des Lichtwellenleiters geschieht hierbei durch folgende verschiedene Verfahren:
a) Der Lichtwellenleiter ist nackt am Fixpunkt geklebt,
b) der Lichtwellenleiter ist in eine Kapillare geklebt, und die Kapillare ihrerseits ist an den Fixpunkt geklebt, gelötet, geschweißt usw.,
c) der Lichtwellenleiter ist metallisiert und sodann in die Kapillare gelötet und diese Kapillare ist sodann ihrerseits an den Fixpunkt gelötet usw.

Alle diese bekannten Befestigungsverfahren für einen Lichtwellenleiter in bezug auf ein weiteres Objekt besitzen mehr oder weniger große Nachteile verschiedener Art wie z. B.:
I) Bei einer Klebung des Lichtwellenleiters an den Fixpunkt muß der Lichtwellenleiter über die Aushärtezeit des Klebers hinweg am Fixpunkt festgehalten werden, was mit einer Genauigkeit von ±0,05 µm beim Stand der Technik praktisch unmöglich ist.
II) Über die Langzeitstabilität der verschiedenen Kleber gibt es noch zu wenig Erkenntnisse.
III) Bei einer Lötung des Lichtwellenleiters an den Fixpunkt mit bisherigen Aufbautechniken des Lasermodulaufbaus ist zum Aufheizen des Lotes eine Wärmequelle notwendig, die die Laserdiode zu großen Teilen mitaufheizt, so daß ein Betrieb der Laserdiode während des Justageprozesses in den meisten Fällen nicht möglich ist, wodurch eine Justage über eine Einkopplung von Licht im Fotodiodenbetrieb und durch optische Beobachtung unmöglich ist, wodurch eine genaue Justage wesentlich erschwert ist.
IV) Bei Schweißung oder Lötung eines in einer Kapillare befestigten Lichtwellenleiters tritt insbesondere beim Schweißen ein beträchtlicher Verzug des Lichtwellenleiters beim Abkühlprozeß auf, der wesentlich größer ist als ±0,05 µm.
V) Bei allen Lichtwellenleiterbefestigungsmethoden, die oben unter a) bis c) angegeben worden sind, wird der Lichtwellenleiter über Zwischenelemente wie z. B. über verschiedene Metalle, verschiedene Werkstoffe, geschraubte und/oder gelötete und/oder geklebte Schnittstellen mit dem Subträger, auf dem die Laserdiode befestigt ist, verbunden. Das Lichtwellenleiterstabilitätsverhalten ist dabei direkt mit dem mechanischen und thermischen Verhalten dieser Zwischenelemente gekoppelt, das bedeutet, daß ein Verzug oder eine thermische Verspannung, die bei Temperaturschwankungen zwischen +60 °C und -40 °C bei der Vielzahl der beim Stand der Technik verwendeten Zwischenelemente unvermeidlich auftritt, direkt auf die Lichtwellenleiter-Laser-Kopplung übertragen wird, so daß die geforderte Langzeitstabilität praktisch nicht einzuhalten ist.

Der vorliegenden Erfindung liegt daher die Aufdgabe zugrunde, ein Verfahren und eine Vorrichtung der eingangs genannten Art und ein damit hergestelltes Bauelement anzugeben, bei denen ein Festkörper mit hoher Genauigkeit justiert und mit hoher Langzeitstabilität in der nach der Justierung erreichten Lage fixiert werden kann.

Diese Aufgabe wird erfindungsgemäß durch ein Verfahren nach dem Anspruch 1, durch eine Vorrichtung nach dem Anspruch 19 und durch ein Bauelement nach dem Anspruch 25 gelöst.

Ausgestaltungen und Vorteile der Erfindung sind in den Unteransprüchen, der Beschreibung und der Zeichnung dargestellt.

Die Erfindung besteht in einer Befestigungsmethode und in einem Justage- und Befestigungsverfahren für Festkörper, insbesondere für Lichtwellenleiter, beispielsweise für Glasfasern, das obige Nachteile vermeidet und bisherige Verfahren wesentlich vereinfacht.

Die Erfindung wird im folgenden anhand der Zeichnung näher erläutert:
- Fig. 1 und 2: zeigen ein Ausführungsbeispiel für ein Bauelement nach der Erfindung.
- Fig. 3: erläutert ein Verfahren und eine Vorrichtung nach der Erfindung.
- Fig. 4: zeigt ein weiteres Ausführungsbeispiel der Erfindung.

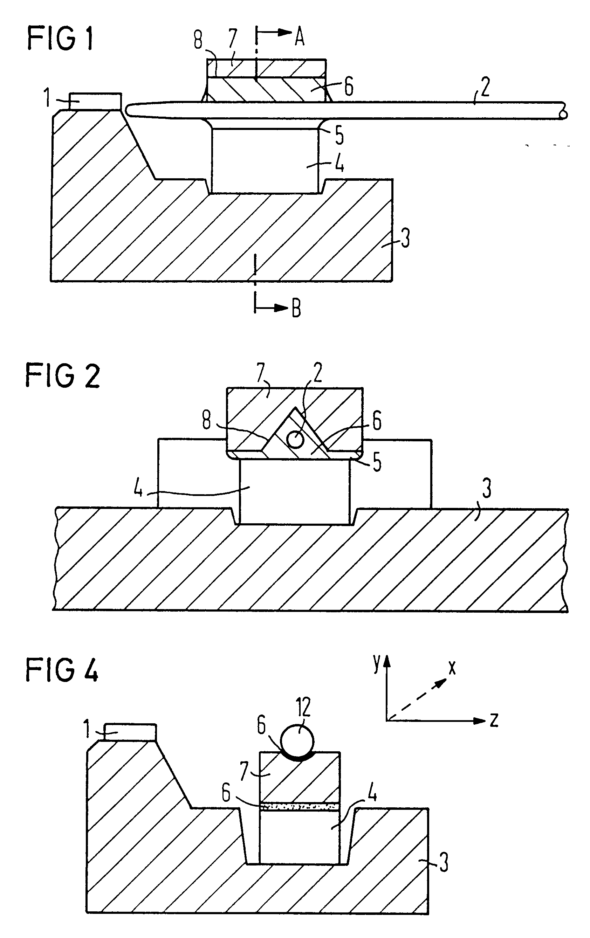

In den Fig. 1 und 2 befinden sich die Faserfixierung 4, 5, 6, 7 und der Laserdioden-Chip 1 auf einem gemeinsamen Träger 3. Damit ist die bestmögliche Befestigung des Festkörpers 2 relativ zum weiteren Objekt 1 ohne Zwischenelemente gegeben.

Der Lichtwellenleiter 2 wird zur Fixierung in einem definierten Abstand vor der Laserdiode 1 in ein Lot 6, z. B. in SnPbAg oder in ein anderes Lot, eingebettet. Das Lot 6 selbst wird nochmals von einem weiteren Körper 7, der in den Fig. 1 und 2 als ein V-Nut-Chip ausgebildet ist, umschlossen, um eine bestmögliche mechanische Lotstabilität zu erreichen. Der weitere Körper 7 besteht aus Halbleitermaterial, beispielsweise aus Silicium. Die V-Nut des weiteren Körpers 7 kann geätzt sein und kann eine Metallisierung 8 aufweisen. Die Lötverbindung zu der der Laserdiode 1 und dem Lichtwellenleiter 2 gemeinsamen Unterlage 3 geschieht hierbei über einen gering wärmeleitenden, auf Oberseite und Unterseite lötfähigen Faserstützpunkt 4. Der Fixpunkt 4 kann auf der Oberseite eine Metallisierung 5 und auf der Unterseite eine entsprechende Metallisierung aufweisen. Mit der gesamten Lichtwellenleiterfixierung 4, 5, 6, 7 ist eine Justage des Lichtwellenleiters 2 im Laserbetrieb bei einer Lasertemperatur von 25 °C möglich.

Als gering wärmeleitende Materialien für den Fixpunkt 4 bieten sich hierzu metallisierte Gläser, metallisierte Keramiken (Porzellan), metallisierter Quarz oder auch Metalle wie rostfreier Stahl oder andere Metalle an. Hierbei kann durch geeignete Materialauswahl und durch geeignete Geometrie des Fixpunkts 4 die vertikale (Δy) Wärmedehnung des Lichtwellenleiterstützpunkts 4 an die vertikale Wärmedehnung des Laserdioden-Trägers 3 angepaßt werden, um Lichtwellenleiterdejustagen infolge von Wärmedehnungsunterschieden im 0,05 µm-Bereich zu vermeiden. Seitliche (Δx) Wärmedehnungsdejustagen sind durch die Befestigung der Laserdiode 1 und des Lichtwellenleiters 2 auf dem gemeinsamen Träger 3 grundsätzlich ausgeschlossen.

Fig. 1 zeigt einen Längsschnitt durch ein Bauelement nach der Erfindung entlang der Achse des Lichtwellenleiters 2. Die Achse des Lichtwellenleiters 2 wird als z-Achse betrachtet. Fig. 2 zeigt einen Querschnitt durch das Bauelement nach Fig. 1, genommen etwa in der Mitte der Lichtwellenleiterfixierung 4, 5, 6, 7.

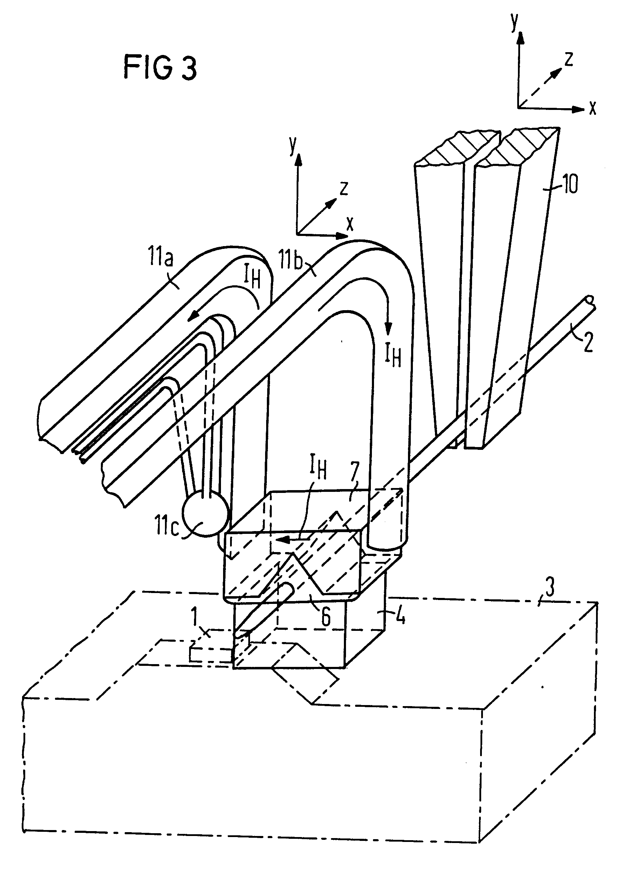

Fig. 3 erläutert das Lichtwellenleiter-Justage- und Befestigungsverfahren. Grundsätzlich geschieht, wie schon anhand der Fig. 1 und 2 dargestellt, die Lichtwellenleiterfixierung in einem definierten Abstand relativ zur Laserdiode 1 in Weichlot, und zwar im Bereich der Lichtwellenleiterfixierung 4, 5, 6, 7 durch Umhüllung des Lichtwellenleiters 2 in x-Richtung und y-Richtung. Die Fixierung des Lichtwellenleiters 2 in z-Richtung kann über eine in der Zeichnung nicht dargestellte Kapillare am Gehäuse des Laserdiodenmoduls geschehen oder am Fixpunkt 4 selbst, wenn der Lichtwellenleiter 2 im Bereich des Fixpunkts 4 eine Metallisierung aufweist.

Die Lichtwellenleiterjustage geschieht im flüssig aufgeschmolzenen Lot 6. Der Lichtwellenleiter 2 wird bei Abschluß des Justageprozesses durch Abkühlen und Erstarren des Lotes 6 fixiert. Hierbei bildet die Höhe des Fixpunkts 4 die einzige Beschränkung des Justagespielraums, die aber durch entsprechende Höhentoleranzen vorher festgelegt werden kann.

Der weitere Körper 7 wird als Lichtwellenleiterfixierungshilfe und gleichzeitig als Wärmequelle zum Aufschmelzen des Lichtwellenleiterfixierungslotes 6 verwendet.

Bei diesem Verfahren ist es nicht notwendig, daß durch eine äußere Wärmequelle wie z. B. durch Heißgas, durch einen Lichtbogen, durch einen Heizstempel usw., wodurch meistens auch die Laserdiode 1 mitaufgeheizt wird, das Lot 6 aufgeschmolzen wird. Vielmehr kann bei diesem Verfahren erreicht werden, daß bezüglich der z-Richtung nur in demjenigen Bereich des Lichtwellenleiters 2 geheizt wird, an dem sich das Lot 6 befindet. Dabei wird die Verlustleistung des Halbleiterkörpers 7 bei Stromdurchfluß zur Aufheizung genutzt (Schottky-Kontakt und Bahnwiderstand), d.h. der Halbleiterkörper 7 wird zwischen zwei Elektroden 11 a, 11 b einer Stromquelle (stromgeregelt) eingespannt. Diese Elektroden 11 a, 11 b sind in Zangenform ausgebildet und an einem x, y, z-Manipulator befestigt. Zur Temperaturkontrolle ist an einem Schenkel der "Heizzange" ein Thermofühler 11 c angebracht. Dieser Thermofühler 11 c kann angelötet, angeschweißt, angeklebt usw. sein.

Der Halbleiterkörper 7 kann in diesem Ausführungsbeispiel ein Silicium-Chip oder ein anderer Halbleiterchip sein.

Wird nun eine Spannung an die in Zangenform ausgebildeten Elektroden 11 a, 11 b angelegt, so fließt ab einer bestimmten Durchbruchspannung (Schottky-Kontakt zwischen dem Metall der Elektroden 11 a, 11 b und dem Halbleiterkörper 7) ein Heizstrom I_{H} durch den Halbleiterkörper 7, der den Halbleiterkörper 7 auf Lottemperatur aufheizen kann. Bei Verwendung eines Siliciumchips für den Halbleiterkörper 7 beträgt die Durchbruchspannung etwa 80 V und ist ein Heizstrom zum Aufheizen auf Lottemperatur von ca. 10 bis 20 mA erforderlich. Hierbei ist es wichtig, daß die Spannungsquelle stromgeregelt die notwendige Spannung dem für die Heizung erforderlichen Strom nachregelt. Die gewünschte Temperatur im Halbleiterkörper 7 kann so über den Heizstrom direkt geregelt und mit dem Thermoelement 11 c kontrolliert werden.

Das für die Einbettung des Lichtwellenleiters 2 notwendige Lot 6 kann durch Vorlotung des metallisierten Halbleiterkörpers 7 in der jeweils gewünschten Dosierung angeboten werden. Hierbei ist der Fixpunkt 4 ebenfalls mit dem gleichen Lot an seiner Oberseite vorgelötet.

Zum Einbetten des Lichtwellenleiters 2 in das Justagelot 6 wird das Lotpolster 6 am Halbleiterkörper 7 mit der "Heizzange", die im wesentlichen aus den Elektroden 11 a, 11 b besteht, wie oben dargestellt aufgeschmolzen und der Halbleiterkörper 7 dann mit dem Manipulator, an dem die "Heizzange" befestigt ist, im heißen Zustand über dem Lichtwellenleiter 2 abgesenkt.

Das aufgeschmolzene Lot 6 umschließt bzw. benetzt bei bloßer Metallisierung des Lichtwellenleiters 2 den Lichtwellenleiter 2 und verbindet sich mit dem übrigen Lot, das auf der Oberseite des Fixpunkts 4 und gegebenenfalls um den Lichtwellenleiter 2 im Bereich des Fixierungsortes herum angeordnet ist, so daß damit eine vollständige Loteinbettung des Lichtwellenleiters 2 gegeben ist. Hierbei kann einerseits eine zusätzliche Lotoxidation durch Schutzgasspülung verhindert werden und eine gleichmäßige Lotverteilung durch Verschiebung des Halbleiterkörpers 7 im flüssigen Lot in kombinierten x- und y-Richtungen erreicht werden. Mit dem Heizzangenmanipulator, zu dem die Elektroden 11 a und 11 b gehören, ist es dann im flüssigen Lotzustand möglich, den Halbleiterkörper 7 optimal mit der V-Nut in x-y-z-Richtung auf den Lichtwellenleiter 2 auszurichten bzw. kann der Halbleiterkörper 7 bei Justage des Lichtwellenleiters 2 über den zusätzlichen Lichtwellenleitermanipulator 10 nachjustiert werden, so daß z. B. ein möglichst gleichmäßiger und enger Lotspalt zwischen Lichtwellenleiter 2, V-Nut des Halbleiterkörpers 7 und dem Fixpunkt 4 entsteht, wodurch die Langzeitstabilität günstig beeinflußt werden kann.

Bei Erreichen des gewünschten Justageortes des Lichtwellenleiters 2 wird das Justagelot 6 über gezieltes Rückfahren des Heizstroms verzögerungsfrei und gezielt abgekühlt, erstarrt und wird damit der Lichtwellenleiter 2 in der justierten Lage fixiert. Der Lot-Aufschmelz- und Justageprozeß kann hierbei beliebig wiederholt werden.

Bei endgültiger Lichtwellenleiterfixierung wird die Heizzange mit den Elektroden 11 a, 11 b ohne Belastung des Halbleiterkörpers 7 geöffnet und wird so die Lichtwellenleiterfixierung 4, 5, 6, 7 vom Heizzangenmanipulator getrennt. Das gleiche gilt auch für den zusätzlichen Lichtwellenleitermanipulator 10.

Wenn anstelle von Lot UV-aushärtbare bzw. wärmeaushärtbare Kleber oder Zemente verwendet werden, kann der Halbleiterkörper 7 mit der V-Nut für die Dosierung der Klebermenge eingesetzt werden; denn für die Stabilität des Lichtwellenleiters 2 ist die absolute Menge und die gleichmäßige Verteilung des Fixiermittels 6, die symmetrisch bezüglich einer Ebene ist, die senkrecht auf der Unterlage des Lichtwellenleiters 2 steht und die die Achse des Lichtwellenleiters 2 enthält, um den Lichtwellenleiter 2 herum von großer Bedeutung.

Generell kann das beschriebene Verfahren auch bei anderen ähnlichen Bauelementen verwendet werden. Beispielsweise kann als Objekt 1 eine Infrarot-Lumineszenzdiode (IRED) oder eine Fotodiode verwendet werden. Das beschriebene Verfahren kann auch bei anderen Vorrichtungen zur Justage und zum Fixieren verwendet werden wie z. B. zum Justieren und Fixieren von Drähten oder sonstigen Objekten, die bezüglich eines weiteren Objekts mit hoher Genauigkeit justiert und mit großer Langzeitstabilität fixiert werden müssen.

Vorteilhaft für die Erfindung ist, daß ein weiterer Körper 7 als Hilfe zum Fixieren des Festkörpers 2 und gleichzeitig als Wärmequelle zum Aufschmelzen des Fixierungslotes 6 dient. Wenn daher ein weiterer Körper 7 diese Eigenschaften erfüllt, ohne daß er zusätzlich eine feste Verbindung mit dem am Ende des Verfahrens erstarrten Fixierungsmittel 6 eingeht, kann nach dem Erstarren des Fixierungsmittels 6 zusammen mit der Heizzange der weitere Körper 7 auch wiederum entfernt werden. Dabei kann der weitere Körper 7 sogar Bestandteil der Heizzange sein. Der weitere Körper 7 muß zur Erfüllung dieser Eigenschaften auch nicht unbedingt ein Halbleiterkörper sein. Als solcher weiterer Körper 7, der nach dem Erstarren des Fixiermittels 6 wieder entfernt werden kann, kann beispielsweise ein Glaskohlenstoff verwendet werden, wie er von Heizvorrichtungen für Glühkathoden her bekannt ist, der wegen seiner räumlich anisotropen elektronischen Transporteigenschaften eine hohe Heizleistung bei günstigen anderen mechanischen und physikalischen Eigenschaften erbringen kann. Bei geeigneter Behandlung der Oberfläche der Aussparung eines solchen weiteren Körpers 7 und gegebenenfalls zusätzlich mit einem Oberflächenüberzug, der eine Entfernung des weiteren Körpers 7 nach dem Erstarren des Fixiermittels 6 ermöglicht, kann der weitere Körper 7 vom erstarrten Fixiermittel 6 wieder entfernt werden. Die Beschaffenheit solcher Überzüge, beispielsweise einer harten, glatten und dünnen Schicht, die aufgedampft oder aufgesputtert oder sonstwie aufgebracht werden kann, ist dem Fachmann wohl bekannt.

Eine vorteilhafte Eigenschaft der Erfindung ist, daß bei Verwendung eines gering wärmeleitenden Fixpunkts 4 nur die allernächste Umgebung des Festkörpers 2 zusammen mit dem Fixiermittel 6 auf eine erhöhte Temperatur gebracht werden muß. Wenn der Unterstützungspunkt 4 selbst Bestandteil des Trägers 3 ist, so kann dieser Vorteil auch dann erzielt werden, wenn der gesamte Träger 3 aus einem gering wärmeleitenden Material besteht.

Der Fixpunkt 4 und das Objekt 1 können auch auf verschiedenen Substraten angeordnet sein. Als Befestigungsmaterial 6 kann in jedem Fall sowohl Lot als auch Kleber verwendet werden.

Die Aufheizung des Befestigungsmaterials 6 muß nicht unbedingt durch Stromdurchfluß des weiteren Körpers 7 erfolgen. Die Aufheizung des weiteren Körpers 7 kann auch durch Induktion mit Hilfe eines elektrischen Wechselfeldes, das von einer Induktionsspule gezielt in Richtung auf den weiteren Körper 7 hin abgestrahlt wird, aufgeheizt werden. Dabei wird die zur Aufheizung des Befestigungsmaterials 6 erforderliche Wärme im Inneren des weiteren Körpers 7 erzeugt. Die Aufheizung des Befestigungsmaterials 6 kann auch durch Wärmestrahlung erfolgen, die im weiteren Körper 7 absorbiert wird. Zu diesem Zweck ist eine wärmeabsorbierende Oberfläche des weiteren Körpers 7 vorteilhaft. Die Wärmestrahlung kann dabei von einem Platinheizwiderstand erzeugt werden und kann zusätzlich durch eine geeignete Optik gezielt auf den weiteren Körper 7 hin reflektiert werden. Die Aufheizung des Befestigungsmaterials 6 kann auch durch eine Heizeinrichtung erfolgen, die in direktem Wärmekontakt mit dem weiteren Körper 7 steht und gezielt diesen weiteren Körper 7 aufheizt. Beispielsweise kann eine Einrichtung ähnlich einer Lötkolbenspitze lösbar auf den weiteren Körper 7 aufgebracht werden. Der weitere Körper 7 fungiert in all diesen Fällen, in denen er nicht durch Stromdurchfluß aufgeheizt wird, als Heizstempel.

Fig. 4 zeigt einen Längsschnitt durch ein weiteres Ausführungsbeispiel der Erfindung ähnlich dem Längsschnitt von Fig. 1. Als weiterer Körper 7 kann auch ein mit einer Vertiefung (Mulde, Nut) versehener Körper dienen, wobei diese Vertiefung letzten Endes zur Justierung und Fixierung des Festkörpers 2 bsw. des Festkörpers 12 dient. In Fig. 4 zeigt die Vertiefung des weiteren Körpers 7 nach oben und trägt beispielsweise eine Linse, im Fall der Fig. 4 eine Kugellinse 12. Dabei kann diese Linse 12 fest mit dem weiteren Körper 7 verbunden sein. Dadurch kann über die Fixierung und Justierung des weiteren Körpers 7 in Fig. 4 indirekt der Festkörper 12 fixiert und justiert werden.

Beispielsweise kann der Festkörper 12 in der Vertiefung des weiteren Körpers 7 mit einem solchen Befestigungsmaterial 6 fixiert sein, das einen höheren Schmelzpunkt hat als die Schicht aus Befestigungsmaterial 6, die sich in Fig. 4 zwischen dem Fixpunkt 4 und dem weiteren Körper 7 befindet. Dadurch kann erreicht werden, daß bei einer Aufheizung des weiteren Körpers 7 zwar die Schicht des Befestigungsmaterials 6 zwischen dem Fixpunkt 4 und dem weiteren Körper 7 schmelzflüssig wird, daß jedoch das Befestigungsmaterial 6 zwischen dem Festkörper 12 und dem weiteren Körper 7 bei einer solchen Temperatur noch nicht schmelzflüssig ist.

Der weitere Körper 7 in Fig. 4 kann mit genau denselben Methoden aufgeheizt werden wie sie anhand der Fig. 1 bis 3 oben beschrieben worden sind. Der weitere Körper 7 kann in den in Fig. 4 angegebenen beiden Raumrichtungen x und z, die gemeinsam Ebenen parallel zur Auflagefläche des Fixpunkts 4 aufspannen (definieren), justiert werden. Die Justage in den verschiedenen Raumrichtungen kann beispielsweise mit Hilfe eines Manipulators erfolgen. Die Justage in Richtung y, d. h. die Justage parallel zur Normalen der Auflagefläche des Fixpunkts 4, kann praktisch ohne Zugabe von zusätzlichem Befestigungsmaterial 6 dadurch erfolgen, daß bei Absenken des Festkörpers 12 ein Teil des Befestigungsmaterials 6 aus dem Zwischenraum zwischen dem Fixpunkt 4 und dem weiteren Körper 7 herausgepreßt wird und daß im gegenteiligen Fall bei Anheben des Festkörpers 12 das Befestigungsmaterial 6 im Zwischenraum zwischen dem Fixpunkt 4 und dem weiteren Körper 7 in das Innere dieses Zwischenraums nachgezogen wird.

Der weitere Körper 7 dient in Fig. 4 als Hilfskörper zum Umsetzen der Heizenergie auf das Befestigungsmaterial 6, um dieses Befestigungsmaterial 6 schmelzflüssig zu machen.

Das Befestigungsmaterial 6 im Zwischenraum zwischen dem Fixpunkt 4 und dem weiteren Körper 7 kann in der Größenordnung zwischen 0,1 und 0,2 mm dick sein. Bei Verwendung einer Kugellinse als Festkörper 12 kann der Durchmesser dieses Festkörpers 500 µm betragen. Wenn der Festkörper 12 eine Kugellinse ist und wenn das Zentrum dieser Kugellinse auf der optischen Achse des vom Objekt 1 emittierten Lichtbündels liegt, kann das vom Objekt 1 divergent emittierte Lichtbündel durch die Kugellinse zu einem parallelen Strahlenbündel geformt werden.

## Patentansprüche

1. Verfahren zur Justage und Fixierung eines Festkörpers (2, 12), bei dem ein Teil des Festkörpers (2, 12) zusammen mit Befestigungsmaterial (6) bezüglich eines weiteren Körpers (7) angeordnet und an einem Fixpunkt (4) fixiert wird, bei dem der Festkörper (2, 12) wenigstens teilweise in das Befestigungsmaterial (6) eingebettet wird, bei dem der weitere Körper (7) aufgeheizt wird bis zu einer Temperatur, bei der der Festkörper (2, 12) bezüglich des Befestigungsmaterials (6) bewegt werden kann, bei dem der Festkörper (2, 12) ausgerichtet wird, bei dem bei Erreichen der gewünschten Justierung des Festkörpers(2, 12) das Befestigungsmaterial (6) über gezieltes Rückfahren der Heizenergiezufuhr bis zur Erstarrung abgekühlt wird, und bei dem dadurch der Festkörper (2, 12) in seiner Position fixiert wird,
**dadurch gekennzeichnet**, daß sich der Fixpunkt (4) auf einem Träger (3) befindet, daß als weiterer Körper (7) ein vom Fixpunkt (4) verschiedener und getrennter Körper verwendet wird, daß das Befestigungsmaterial (6) in eine Aussparung des weiteren Körpers (7) eingebettet wird, daß der weitere Körper (7) während des Verfahrens im oder auf dem Befestigungsmaterial (6) bewegt werden kann, und daß der weitere Festkörper (7) mit seiner Aussparung ausgerichtet werden kann.

2. Verfahren nach Anspruch 1, **dadurch gekennzeichnet,** daß der weitere Körper (7) durch Stromdurchfluß aufgeheizt wird.

3. Verfahren nach Anspruch 1, **dadurch gekennzeichnet,** daß der weitere Körper (7) durch Induktion aufgeheizt wird.

4. Verfahren nach Anspruch 1, **dadurch gekennzeichnet,** daß der weitere Körper (7) durch Wärmekontakt aufgeheizt wird.

5. Verfahren nach Anspruch 1, **dadurch gekennzeichnet,** daß der weitere Körper (7) durch Wärmestrahlung aufgeheizt wird.

6. Verfahren nach Anspruch 1, **dadurch gekennzeichnet,** daß zuerst das Befestigungsmaterial (6) in die Aussparung des weiteren Körpers (7) eingebettet wird, daß anschließend der weitere Körper (7) aufgeheizt wird, bis das Befestigungsmaterial (6) weich wird, und daß anschließend der Festkörper (2) in das Befestigungsmaterial (6) eingebettet wird.

7. Verfahren nach Anspruch 1, **dadurch gekennzeichnet,** daß sowohl der Festkörper (2) in Befestigungsmaterial (6) eingebettet wird als auch Befestigungsmaterial (6) in die Aussparung des weiteren Körpers (7) eingebettet wird, daß anschließend der weitere Körper (7) aufgeheizt wird, und daß anschließend der in Befestigungsmaterial (6) eingebettete Festkörper (2) zusätzlich in das in die Aussparung des weiteren Körpers (7) eingebettete Befestigungsmaterial (6) eingebettet wird.

8. Verfahren nach einem der Ansprüche 1 bis 7, **dadurch gekennzeichnet,** daß der Festkörper (2) vor der Einbettung in das Befestigungsmaterial (6) teilweise mit einem Überzug versehen wird, der die Fixierung des Festkörpers (2) in das Befestigungsmaterial (6) verbessert.

9. Verfahren nach einem der Ansprüche 1 bis 8, **dadurch gekennzeichnet,** daß als Befestigungsmaterial (6) Lot verwendet wird, das zur Justage und Fixierung über das Aufheizen des weiteren Körpers (7) flüssig aufgeschmolzen wird.

10. Verfahren nach einem der Ansprüche 1 bis 9, **dadurch gekennzeichnet,** daß der weitere Körper (7) zwischen zwei Elektroden (11 a, 11 b) einer Stromquelle eingespannt wird.

11. Verfahren nach einem der Ansprüche 1 bis 10, **dadurch gekennzeichnet,** daß als weiterer Körper (7) ein Halbleiterkörper verwendet wird.

12. Verfahren nach einem der Ansprüche 1 bis 10, **dadurch gekennzeichnet,** daß als weiterer Körper (7) ein Kohlenstoffkörper verwendet wird.

13. Verfahren nach einem der Ansprüche 1 bis 12, **dadurch gekennzeichnet,** daß die gewünschte Temperatur im weiteren Körper (7) über den Heizstrom, mit dem der weitere Körper (7) aufgeheizt wird, direkt geregelt wird.

14. Verfahren nach einem der Ansprüche 1 bis 13, **dadurch gekennzeichnet,** daß die Justierung des Festkörpers (2) und gegebenenfalls des weiteren Körpers (7) mit mindestens einem Manipulator (10, 11 a, 11 b) erfolgt.

15. Verfahren nach einem der Ansprüche 1 bis 14, **dadurch gekennzeichnet,** daß eine Oxidation des Befestigungsmaterials (6) durch Schutzgasspülung verhindert wird.

16. Verfahren nach einem der Ansprüche 1 bis 15, **dadurch gekennzeichnet,** daß der weitere Körper (7) mit seiner Aussparung für die Dosierung der Menge des Befestigungsmaterials (6) eingesetzt wird.

17. Verfahren nach einem der Ansprüche 1 bis 16, **dadurch gekennzeichnet,** daß das Befefestigungsmaterial (6) symmetrisch bezüglich einer Ebene, die eine Längsachse (z) des Festkörpers enthält und die senkrecht auf einer Unterlage (4) des Festkörpers (2) steht, verteilt wird.

18. Verfahren nach einem der Ansprüche 1 bis 17, **dadurch gekennzeichnet,** daß der Festkörper eine Kugellinse (12) ist, die zusammen mit dem weiteren Körper (7) an dem Fixpunkt (4) fixiert wird.

19. Vorrichtung zur Justage und zur Fixierung eines Festkörpers (2), bei der ein Teil des Festkörpers (2) zusammen mit Befestigungsmaterial (6) bezüglich eines weiteren Körpers (7) angeordnet und an einem Fixpunkt (4) fixiert ist, bei der der Festkörper (2) in zwei Raumdimensionen (x, y) vollständig und in einer dritten Raumdimension (z) nur teilweise in das Befestigungsmaterial (6) eingebettet ist, und bei der der weitere Körper (7) zwischen zwei Elektroden (11a, 11b) zur Aufheizung des weiteren Körpers (7) durch Stromdurchfluß eingespannt ist, **dadurch gekennzeichnet,** daß der weitere Körper (7) ein vom Fixpunkt (4) verschiedener und getrennter Körper ist, daß der Teil des Festkörpers (2) im weiteren Körper (7) angeordnet ist, daß das Befestigungsmaterial (6) in eine Aussparung des weiteren, elektrisch leitfähigen Körpers (7) eingebettet ist, und daß der weitere Körper (7) ein Halbleiterkörper oder ein Kohlenstoffkörper ist, der als Teil der Vorrichtung als Wärmequelle zum Aufheizen des Befestigungsmaterials (6) dient.

20. Vorrichtung nach Anspruch 19, **dadurch gekennzeichnet,** daß der weitere Körper (7) ein Halbleiterkörper mit einer V-Nut als Aussparung ist.

21. Vorrichtung nach Anspruch 19 oder 20, **dadurch gekennzeichnet,** daß die Elektroden (11a, 11b) in Zangenform ausgebildet und an einem Manipulator befestigt sind.

22. Vorrichtung nach einem der Ansprüche 19 bis 21, **dadurch gekennzeichnet,** daß zur Temperaturkontrolle an den zangenförmigen Elektroden (11a, 11b) eine Temperaturmeßeinrichtung (11c) befestigt ist.

23. Vorrichtung nach einem der Ansprüche 19 bis 22, **dadurch gekennzeichnet,** daß zur Justage des Festkörpers (2) ein zusätzlicher Festkörpermanipulator (10) vorgesehen ist.

24. Vorrichtung nach einem der Ansprüche 19 bis 23, **dadurch gekennzeichnet,** daß die Aussparung des weiteren Körpers (7) symmetrisch bezüglich einer Ebene ist, die senkrecht auf dem Fixpunkt (4) des Festkörpers (2) steht und eine Längsachse (z) des Festkörpers (2) enthält.

25. Bauelement, bei dem ein Teil eines Lichtwellenleiters zusammen mit Befestigungsmaterial (6) an einem Fixpunkt (4) fixiert ist, wobei der Lichtwellenleiter (2) bezüglich eines weiteren Objekts (1) justiert und fixiert ist, bei dem sich der Fixpunkt (4) und das Objekt (1) auf einem gemeinsamen Träger (3) befinden, **dadurch gekennzeichnet,** daß der Teil des Lichtwellenleiters als Festkörper (2) zusammen mit dem Befestigungsmaterial (6) direkt am Fixpunkt (4) fixiert ist, daß der Lichtwellenleiter (2) in das Befestigungsmaterial (6) parallel zu einem Stück der Längsachse (z) des Lichtwellenleiters (2) vollständig eingebettet ist, daß dieses Befestigungsmaterial (6) in einer Aussparung eines weiteren Körpers (7) eingebettet ist, daß der weitere Körper (7) vom Fixpunkt (4) verschieden und getrennt ist, daß der Lichtwellenleiter (2) zusammen mit dem weiteren Körper mittels des Befestigungsmaterials (6) an dem Fixpunkt (4) fixiert ist, und daß der weitere Körper (7) ein Halbleiterkörper oder ein Kohlenstoffkörper ist.

26. Bauelement nach Anspruch 25, **dadurch gekennzeichnet,** daß der Fixpunkt (4) Teil des gemeinsamen Trägers (3) ist.

27. Bauelement nach Anspruch 25 oder 26, **dadurch gezennzeichnet,** daß der Fixpunkt (4) gering wärmeleitend ist.

28. Bauelement nach einem der Ansprüche 25 bis 27, **dadurch gekennzeichnet,** daß durch geeignete Materialauswahl und Geometrie die vertikale Wärmedehnung des Fixpunkts (4) an die vertikale Wärmedehnung des Objektträgers (3) angepaßt ist.

29. Bauelement nach einem der Ansprüche 25 bis 28, **gekennzeichnet** durch eine Laserdiode als Objekt (1).

30. Bauelement nach einem der Ansprüche 25 bis 28, **gekennzeichnet** durch eine IRED als Objekt (1).

31. Bauelement nach einem der Ansprüche 25 bis 28, **gekennzeichnet** durch eine Fotodiode als Objekt (1).

## Claims

1. Method for adjusting and fixing a solid body (2, 12) in which a portion of the solid body (2, 12) is arranged together with fixing material (6) relative to a further body (7) and fixed at a fixing point (4), in which the solid body (2, 12) is embedded at least partially in the fixing material (6), in which the further body (7) is heated up as far as a temperature at which the solid body (2, 12) can be moved relative to the fixing material (6), in which the solid body (2, 12) is aligned, in which, upon achievement of the desired adjustment of the solid body (2, 12), the fixing material (6) is cooled down as far as solidification by pinpointed reversal of the supply of heating energy, and in which the solid body (2, 12) is thereby fixed in its position, characterised in that the fixing point (4) is situated on a support (3), in that a body that is different and separate from the fixing point (4) is used as the further body (7), in that the fixing material (6) is embedded in a recess in the further body (7), in that during the method the further body (7) can be moved in or on the fixing material (6), and in that it is possible to align the further solid body (7) with its recess.

2. Method according to Claim 1, characterised in that the further body (7) is heated up by the passage of current.

3. Method according to Claim 1, characterised in that the further body (7) is heated up by induction.

4. Method according to Claim 1, characterised in that the further body (7) is heated up by thermal contact.

5. Method according to Claim 1, characterised in that the further body (7) is heated up by thermal radiation.

6. Method according to Claim 1, characterised in that the fixing material (6) is firstly embedded in the recess in the further body (7), in that the further body (7) is subsequently heated up until the fixing material (6) becomes soft, and in that the solid body (2) is subsequently embedded in the fixing material (6).

7. Method according to Claim 1, characterised in that both the solid body (2) is embedded in fixing material (6) and fixing material (6) is embedded in the recess in the further body (7), in that the further body (7) is subsequently heated up, and in that the solid body (2) embedded in fixing material (6) is subsequently additionally embedded in the fixing material (6) embedded in the recess in the further body (7).

8. Method according to one of Claims 1 to 7, characterised in that, before embedding in the fixing material (6), the solid body (2) is partially provided with a coating which improves the fixing of the solid body (2) in the fixing material (6).

9. Method according to one of Claims 1 to 8, characterised in that use is made as fixing material (6) of solder which, for the purpose of adjustment and fixing, is melted until liquid by heating up the further body (7).

10. Method according to one of Claims 1 to 9, characterised in that the further body (7) is clamped between two electrodes (11a, 11b) of a current source.

11. Method according to one of Claims 1 to 10, characterised in that a semiconductor body is used as the further body (7).

12. Method according to one of Claims 1 to 10, characterised in that a carbon body is used as the further body (7).

13. Method according to one of Claims 1 to 12, characterised in that the desired temperature in the further body (7) is directly regulated via the heating current by means of which the further body (7) is heated up.

14. Method according to one of Claims 1 to 13, characterised in that the adjustment of the solid body (2) and, if necessary, of the further body (7) is performed by means of at least one manipulator (10, 11a, 11b).

15. Method according to one of Claims 1 to 14, characterised in that oxidation of the fixing material (6) is prevented by rinsing with inert gas.

16. Method according to one of Claims 1 to 15, characterised in that the further body (7) with its recess is used for dosing the quantity of the fixing material (6).

17. Method according to one of Claims 1 to 16, characterised in that the fixing material (6) is distributed symmetrically relative to a plane which contains a longitudinal axis (z) of the solid body and is perpendicular to a base (4) of the solid body (2).

18. Method according to one of Claims 1 to 17, characterised in that the solid body is a spherical lens (12) which is fixed together with the further body (7) to the fixing point (4).

19. Apparatus for adjusting and for fixing a solid body (2), in which a portion of the solid body (2) is arranged together with fixing material (6) relative to a further body (7) and is fixed at a fixing point (4), in which the solid body (2) is embedded in the fixing material (6) completely in two spatial dimensions (x, y) and only partially in the third spatial dimension (z), and in which the further body (7) is clamped between two electrodes (11a, 11b) for heating up the further body (7) by the passage of current, characterised in that the further body (7) is a body that is different and separate from the fixing point (4), in that the portion of the solid body (2) is arranged in the further body (7), in that the fixing material (6) is embedded in a recess in the further, electrically conductive body (7), and in that the further body (7) is a semiconductor body or a carbon body which as part of the apparatus serves as the heat source for heating up the fixing material (6).

20. Apparatus according to Claim 19, characterised in that the further body (7) is a semiconductor body having a V-groove as the recess.

21. Apparatus according to Claim 19 or 20, characterised in that the electrodes (11a, 11b) are constructed in pincer shape and fixed to a manipulator.

22. Apparatus according to one of Claims 19 to 21, characterised in that, for monitoring temperature, a temperature-measuring device (11c) is fixed to the pincer-shaped electrodes (11a, 11b).

23. Apparatus according to one of Claims 19 to 22, characterised in that an additional solid-body manipulator (10) is provied for adjusting the solid body (2).

24. Apparatus according to one of Claims 19 to 23, characterised in that the recess in the further body (7) is symmetrical relative to a plane which is perpendicular to the fixing point (4) of the solid body (2) and contains a longitudinal axis (z) of the solid body (2).

25. Component in which a portion of an optical fibre is fixed together with fixing material (6) at a fixing point (4), the optical fibre (2) being adjusted and fixed relative to a further object (1), in which the fixing point (4) and the object (1) are situated on a common support (3), characterised in that the portion of the optical fibre as the solid body (2) is fixed together with the fixing material (6) directly at the fixing point (4), in that the optical fibre (2) is completely embedded in the fixing material (6) parallel to a piece of the longitudinal axis (z) of the optical fibre (2), in that this fixing material (6) is embedded in the recess in a further body (7), in that the further body (7) is different and separate from the fixing point (4), in that the optical fibre (2) is fixed at the fixing point (4) together with the further body by means of the fixing material (6), and in that the further body (7) is a semiconductor body or a carbon body.

26. Component according to Claim 25, characterised in that the fixing point (4) is a portion of the common support (3).

27. Component according to Claim 25 or 26, characterised in that the fixing point (4) is slightly thermally conductive.

28. Component according to one of Claims 25 to 27, characterised in that the vertical thermal expansion of the fixing point (4) is matched to the vertical thermal expansion of the object support (3) by suitable material selection and geometry.

29. Component according to one of Claims 25 to 28, characterised by a laser diode as the object (1).

30. Component according to one of Claims 25 to 28, characterised by an IRED as the object (1).

31. Component according to one of Claims 25 to 28, characterised by one photodiode as the object (1).

## Revendications

1. Procédé pour ajuster et fixer un corps solide (2,12), selon lequel on dispose une partie du corps solide (2,12) ainsi qu'un matériau de fixation (6) par rapport à un autre corps (7) et on les fixe en un point de fixation (4), et selon lequel on insère au moins partiellement le corps solide (2;12) dans le matériau de fixation (6), et on chauffe l'autre corps (7) jusqu'à une température à laquelle le corps fixe (2,12) peut être déplacé par rapport au matériau de fixation (6), et selon lequel on oriente le corps solide (2,12), et selon lequel lorsque l'ajustement désiré du corps solide (2,12) est atteint, on refroidit le matériau de fixation (6) au moyen d'une réduction désirée de l'envoi de l'énergie de chauffage, jusqu'à la solidification, et selon lequel le corps solide (2,12) est ainsi fixé en position,
caractérisé par le fait que le point de fixation (4) est situé sur un support (3), qu'on utilise comme autre corps (7) un corps différent et séparé du point de fixation (4), qu'on insère le matériau de fixation (6) dans un évidement de l'autre corps (7), qu'on peut déplacer l'autre corps (7), au cours du procédé, dans ou sur le matériau de fixation (6) et qu'on aligne l'autre corps solide (7) au moyen de son évidement.

2. Procédé suivant la revendication 1, caractérisé par le fait que l'autre corps (7) est chauffé au moyen d'un flux de courant.

3. Procédé suivant la revendication 1, caractérisé par le fait que l'autre corps (7) est chauffé par induction.

4. Procédé suivant la revendication 1, caractérisé par le fait que l'autre corps (7) est chauffé par conduction thermique.

5. Procédé suivant la revendication 1, caractérisé par le fait que l'autre corps (7) est chauffé par rayonnement thermique.

6. Procédé suivant la revendication 1, caractérisé par le fait qu'on introduit tout d'abord le matériau de fixation (6) dans l'évidement de l'autre corps (7), qu'on chauffe ensuite l'autre corps (7) jusqu'à ce que le matériau de fixation (6) devienne mou et qu'ensuite on insère le corps solide (2) dans le matériau de fixation (6).

7. Procédé suivant la revendication 1, caractérisé par le fait qu'on insère aussi bien le corps de fixation (2) dans le matériau de fixation (6) que le matériau de fixation (6) dans l'évidement de l'autre corps (7), qu'ensuite on chauffe l'autre corps (7) et puis on insère en supplément le corps solide (2), inséré dans le matériau de fixation (6), dans le matériau de fixation (6) inséré dans l'évidement de l'autre corps (7).

8. Procédé suivant l'une des revendications 1 à 7, caractérisé par le fait qu'on applique au moins partiellement sur le corps solide (2), avant son insertion dans le matériau de fixation (6), un revêtement qui améliore la fixation du corps solide (2) dans le matériau de fixation (6).

9. Procédé suivant l'une des revendications 1 à 8, caractérisé par le fait qu'on utilise, comme matériau de fixation (6), de la brasure que l'on amène par fusion à l'état liquide au moyen du chauffage de l'autre corps (7), pour l'ajustement et la fixation.

10. Procédé suivant l'une des revendications 1 à 9, caractérisé par le fait qu'on serre l'autre corps (7) entre deux électrodes (11 a, 11 b) d'une source de courant.

11. Procédé suivant l'une des revendications 1 à 10, caractérisé par le fait qu'on utilise comme autre corps (7) un corps semiconducteur.

12. Procédé suivant l'une des revendications 1 à 10, caractérisé par le fait qu'on utilise comme autre corps (7) un corps en carbone.

13. Procédé suivant l'une des revendications 1 à 12, caractérisé par le fait que la température désirée dans l'autre corps (7) est réglée directement au moyen du courant de chauffage, avec lequel l'autre corps (7) est chauffé.

14. Procédé suivant l'une des revendications 1 à 13, caractérisé par le fait que l'ajustement du corps solide (2) et éventuellement de l'autre corps (7) s'effectue à l'aide d'un manipulateur (10, 11 a, 11b).

15. Procédé suivant l'une des revendications 1 à 14, caractérisé par le fait qu'on empêche une oxydation du matériau de fixation (6) au moyen d'un balayage par un gaz protecteur.

16. Procédé suivant l'une des revendications 1 à 15, caractérisé par le fait qu'on utilise l'autre corps (7) pourvu de son évidement pour le dosage de la quantité du matériau de fixation (6).

17. Procédé suivant l'une des revendications 1 à 16, caractérisé en ce que le matériau de fixation (6) est réparti symétriquement par rapport à un plan qui contient l'axe longitudinal (z) du corps solide et est perpendiculaire à un support (4) du corps solide (2).

18. Procédé suivant l'une des revendications 1 à 17, caractérisé par le fait que le corps solide est une lentille sphérique (12), que l'on fixe conjointement avec l'autre corps (7) sur le point de fixation (4).

19. Dispositif pour ajuster et fixer un corps solide (2), dans lequel une partie du corps solide (2) est disposée, ainsi qu'un matériau de fixation (6), par rapport à un autre corps (7) et est fixée en un point de fixation (4), le corps solide (2) est inséré complètement dans deux dimensions de l'espace (x, y) et seulement partiellement, dans une troisième dimension de l'espace (z), dans un matériau de fixation (6), et dans lequel l'autre corps (7) est serré entre deux électrodes (11a, 11b) servant à chauffer l'autre corps (7) au moyen du passage d'un courant, caractérisé par le fait que l'autre corps (7) est un corps différent et séparé du point de fixation (4), que la partie du corps solide (2) est disposée dans l'autre corps (7), que le matériau de fixation (6) est inséré dans un évidement de l'autre corps (7) électriquement conducteur, et que l'autre corps (7) est un corps semiconducteur ou un corps en carbone, qui est utilisé en tant que partie du dispositif formant source de chaleur servant à chauffer le matériau de fixation (6).

20. Dispositif suivant la revendication 19, caractérisé par le fait que l'autre corps (7) est un corps semiconducteur possédant une rainure en V en tant qu'évidement.

21. Dispositif suivant la revendication 19 ou 20, caractérisé par le fait que les électrodes (11a, 11b) sont réalisées sous la forme de pinces et sont fixées à un manipulateur.

22. Dispositif suivant l'une des revendications 19 à 21, caractérisé par le fait que pour le contrôle de la température, un dispositif de mesure de la température (11c) est fixé aux électrodes en forme de pinces (11a, 11b).

23. Dispositif suivant l'une des revendications 19 à 22, caractérisé par le fait que pour l'ajustement du corps solide (2), il est prévu un manipulateur supplémentaire (10) du corps solide.

24. Dispositif suivant l'une des revendications 19 à 23, caractérisé par le fait que l'évidement de l'autre corps solide (7) est symétrique par rapport à un plan qui est perpendiculaire au point de fixation (4) du corps solide (2) et contient un axe longitudinal (z) du corps solide (2).

25. Composant, dans lequel une partie d'un guide d'ondes optiques est fixée, ainsi qu'un matériau de fixation (6), en un point de fixation (4), le guide d'ondes optiques (2) étant ajusté et fixé par rapport à un autre objet (1), et dans lequel le point de fixation (4) et l'objet (1) sont situés sur un support commun (3), caractérisé par le fait que la partie du guide d'ondes optiques est fixée, en tant que corps solide (2), et conjointement avec le matériau de fixation (6), directement sur le point de fixation (4), que le guide d'ondes optiques (2) est inséré complètement dans le matériau de fixation (6) parallèlement à une partie de l'axe longitudinal (z) du guide d'ondes optiques (2), que ce matériau de fixation (6) est inséré dans un évidement d'un autre corps (7), que l'autre corps (7) est différent et séparé du point de fixation (4), que le guide d'ondes optiques (2) est fixé, conjointement avec l'autre corps, sur le point de fixation (4) au moyen du matériau de fixation (6), et que l'autre corps (7) est un corps semiconducteur ou un corps en carbone.

26. Composant suivant la revendication 25, caractérisé par le fait que le point de fixation (4) fait partie du support commun (3).

27. Composant suivant la revendication 25 ou 26, caractérisé par le fait que le point de fixation (4) est faiblement thermoconducteur.

28. Composant suivant l'une des revendications 25 à 27, caractérisé par le fait que la dilatation thermique verticale du point de fixation (4) est adaptée à la dilatation thermique verticale du porte-objet (3) grâce à un choix approprié du matériau et une géométrie appropriée.

29. Composant suivant l'une des revendications 25 à 28, caractérisé par une diode laser en tant qu'objet (1).

30. Composant suivant l'une des revendications 25 à 28, caractérisé par une diode IRED en tant qu'objet (1).

31. Composant suivant l'une des revendications 25 à 28, caractérisé par une photodiode en tant qu'objet (1).
